# EUROPÄISCHE PATENTSCHRIFT

(11) **EP 0 659 520 B1**
(45) Veröffentlichungstag und Bekanntmachung des Hinweises auf die Patenterteilung: **25.08.1999**
(21) Anmeldenummer: 93120198.2
(22) Anmeldetag: 15.12.1993
(51) Int. Cl.: B23Q 1/54, B23C 3/18

(54) **Werkzeugmaschine**
Machine-tool
Machine-outil

(43) Veröffentlichungstag der Anmeldung: 28.06.1995
(73) Patentinhaber: STARRAG, CH-9400 Rorschacherberg (CH)
(72) Erfinder: Kobler, Paul, CH-9403 Goldach (CH)
(74) Vertreter: EGLI-EUROPEAN PATENT ATTORNEYS

(56) Entgegenhaltungen:
- EP-A- 0 252 291
- EP-A- 0 565 050
- CH-A- 661 678
- DE-A- 2 614 779
- DE-A- 3 411 647
- GB-A- 1 381 098

## Beschreibung

Die Erfindung betrifft eine Werkzeugmaschine gemäss dem Oberbegriff des Anspruchs 1 sowie Verwendungen derselben. Eine derartige Werkzeugmaschine ist aus dem Prospekt "BostonMatic 5-AXIS PRECISION CONTOURING SYSTEM" der BOSTON DIGITAL Corporation bekannt. Bei Werkzeugmaschinen dieses Typs schneidet die Schwenkachse, um welche der Werkzeugträger schwenkbar ist, die Bearbeitungsachse im Bearbeitungsbereich, was den Vorteil hat, dass bei Schwenkungen des Bearbeitungswerkzeugs zur besseren Anpassung an die Ausrichtung der Werkstückoberfläche nur geringe, gewöhnlich auf alle Achsen verteilte Ausgleichsbewegungen erforderlich sind.

Die Schwenkachse steht jedoch bei der im genannten Prospekt gezeigten Maschine normal auf die Bearbeitungsachse, was verschiedene Nachteile mit sich bringt. So ist der Werkzeugträger U-förmig und damit ziemlich aufwendig aufgebaut und vor allem lang, so dass ihn die auf das Bearbeitungswerkzeug einwirkenden Reaktionskräfte verhältnismässig stark deformieren. Aus diesem Grund ist die Konstruktion nicht sehr stabil, was, wenn die Anforderungen an die Präzision der Bearbeitung sehr hoch sind, zu Schwierigkeiten führt oder mindestens eine sehr massive Ausführung bedingt.

Dazu kommt, dass eine Schwenkung des Werkzeugträgers nur in einer Ebene möglich ist, in welcher zwangsläufig auch die Werkstückaufnahme mit dem Werkstück angeordnet ist. Dies schränkt den Schwenkbereich ein, da bei bereits bei Schwenkwinkeln von deutlich weniger als 90° Kollision auftritt.

Hier soll die Erfindung Abhilfe schaffen. Die Erfindung, wie sie in Anspruch 1 gekennzeichnet ist, schafft eine Werkzeugmaschine der eingangs genannten Art, deren Aufbau einfach und stabil ist und daher mit geringem Aufwand hohe Genauigkeit ermöglicht. Ausserdem lässt sie grosse Schwenkwinkel zu, was eine sehr weitgehende Anpassung der Werkzeugposition an die Orientierung der Werkstückoberfläche erlaubt, so dass hohe Oberflächenqualitäten auf einfache Weise erreichbar sind.

Besonders geeignet sind erfindungsgemässe Werkzeugmaschinen zum Fräsen von Turbinen- und Triebwerkschaufeln sowie Verdichterrädern, wo bei verhältnismässig komplizierter Form hohe Oberflächenqualität erreicht werden muss.

Im folgenden wird die Erfindung anhand von lediglich Ausführungsbeispiele darstellenden Figuren näher erläutert.
Es zeigen
- Fig. 1: eine Seitenansicht einer erfindungsgemässen Werkzeugmaschine nach einer ersten Ausführungsform in der Grundstellung,
- Fig. 2: eine Draufsicht auf die Werkzeugmaschine nach Fig. 1 mit ausgeschwenktem Werkzeugträger,
- Fig. 3: eine Seitenansicht der Werkzeugmaschine in Richtung des mit III bezeichneten Pfeils in Fig. 2,
- Fig. 4: schematisch den Bewegungsspielraum der Bearbeitungsachse und
- Fig. 5: eine Seitenansicht einer erfindungsgemässen Werkzeugmaschine nach einer zweiten Ausführungsform in der Grundstellung.

Die erfindungsgemässe Werkzeugmaschine ist in den Figuren weitgehend schematisch dargestellt, da die Erfindung den prinzipiellen Aufbau betrifft und die Umsetzung desselben in die Praxis dem Fachmann keine Schwierigkeiten bietet.

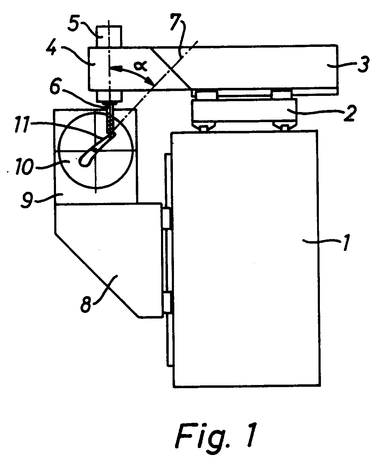

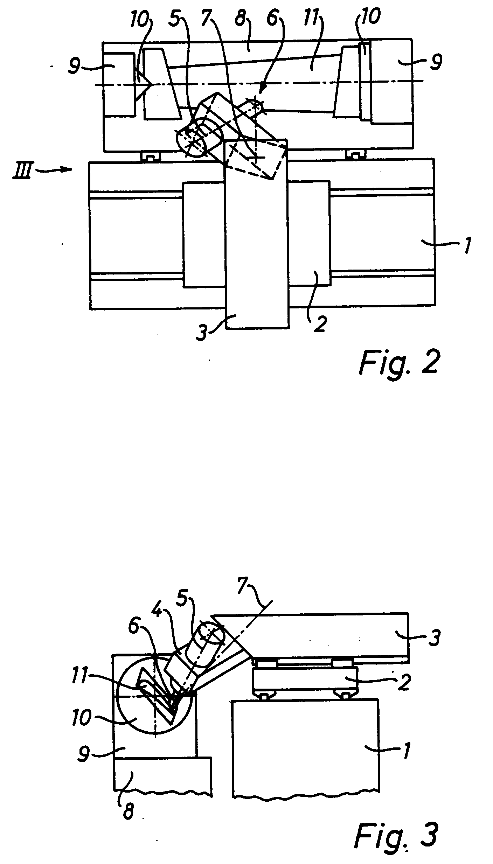

Auf der Oberseite eines quaderförmigen Ständers 1 ist längs einer normal zur Bildebene der Fig. 1 gerichteten horizontalen ersten Translationsachse ein erster Schlitten 2 verschiebbar gelagert, der einen zweiten Schlitten 3 trägt, welcher längs einer zur ersten Translationsachse normalen, gleichfalls horizontalen zweiten Translationsachse verschiebbar ist. Der zweite Schlitten 3 trägt einen Werkzeugträger 4 mit einem um eine Bearbeitungsachse 5 rotierbaren, als Fräskopf ausgebildeten Bearbeitungswerkzeug 6. Der Werkzeugträger 4 ist um eine Schwenkachse 7 schwenkbar am zweiten Schlitten 3 befestigt. An der Vorderseite des Ständers 1 ist ein weiterer Schlitten 8 längs einer vertikalen Translationsachse auf den Werkzeugträger 4 zu und von ihm weg verschiebbar gelagert. Er trägt eine Rundstation 9 (in Fig. 1, 3 sind Teile davon weggelassen) mit einer Werkstückaufnahme 10, die drehbar in der Rundstation 9 gelagert ist. Die Drehachse ist zur ersten Translationsachse parallel.

In die Werkstückaufnahme 10 ist eine Turbinenschaufel als Werkstück 11 um ihre Längsachse drehbar eingespannt. Die Schwenkachse 7 geht durch die Spitze des Bearbeitungswerkzeugs 6 und schneidet dort die Bearbeitungsachse 5 unter einem Neigungswinkel α von 45°. Alle fünf Achsen sind angetrieben. Die Bewegungen erfolgen programmgesteuert.

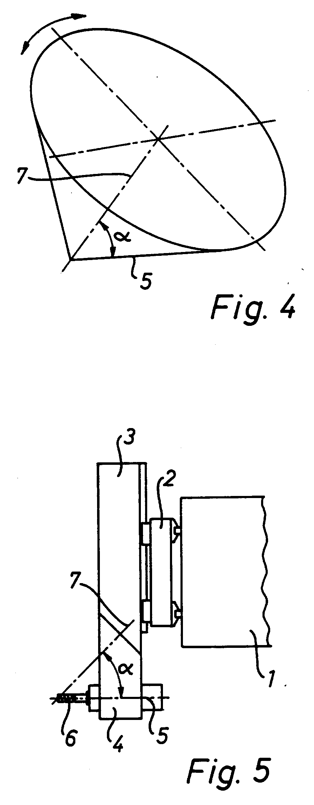

Selbstverständlich kommt es in erster Linie auf die Möglichkeiten relativer Bewegung zwischen dem Bearbeitungswerkzeug 6 und dem Werkstück 11 an. Der Aufbau der Werkzeugmaschine kann im einzelnen ganz anders sein als der oben beschriebene. So ist in Fig. 5 eine Ausführung dargestellt, bei welcher der zweite Schlitten 3, an dessen unterem Ende der Werkzeugträger 4 aufgehängt ist, längs einer vertikalen Translationsachse verschiebbar ist, während der erste Schlitten 2 an der Vorderseite des Ständers 1 horizontal verschiebbar befestigt ist. Die (nicht dargestellte) Rundstation ist auf einem längs einer horizontalen Translationsachse zum Ständer 1 hin und von ihm weg verschiebbaren Schlitten befestigt.

Dass die Schwenkachse 7 mit der Bearbeitungsachse 5 einen spitzen Winkel einschliesst, hat zur Folge, dass die Schneidkante des Bearbeitungswerkzeugs 6 vom Schwenklager verhältnismässig geringen Abstand hat und der Werkzeugträger 4 gerade und entsprechend kurz ausgeführt sein kann. Dadurch ist die Aufhängung des Bearbeitungswerkzeugs 6 äusserst stabil und die Bearbeitungsgenauigkeit beeinträchtigende Deformationen des Werkzeugträgers 4 sind auf ein Minimum reduziert.

Darüberhinaus ist ein grosser Schwenkbereich von 90° oder mehr nach beiden Seiten möglich - wobei die Spitze des Bearbeitungswerkzeugs 6 sich bei Schwenkungen nicht oder nur geringfügig verschiebt, so dass hohe Arbeitsgeschwindigkeiten erreichbar sind -, da der Werkzeugträger 4 nicht nur nach unten, sondern zugleich aus der vertikalen Ebene, in der die Werkstückaufnahme 10 mit dem Werkstück 11 liegt, heraus gegen den Ständer 1 hin geschwenkt wird, so dass die Gefahr von Kollisionen wesentlich reduziert ist. Die Bearbeitungsachse 5 beschreibt bei solchen Schwenkungen einen Sektor eines Kegelmantels, dessen Achse die Schwenkachse 7 ist (Fig. 4).

Die erfindungsgemässen Vorteile erweisen sich als besonders wertvoll bei der Bearbeitung von Turbinen- oder Triebwerkschaufeln, bei der eine hohe Oberflächenqualität erreicht werden muss, was eine genaue Anpassung der Lage der Schneidkante des Bearbeitungswerkzeugs 6 an die Ausrichtung der Oberfläche des Werkstücks 11 erfordert. Dies bedingt Schwenkungen des Werkzeugträgers 4 über einen weiten Bereich, die sonst leicht zu Kollisionsproblemen führen.

Die Bearbeitung wird so vorgenommen, dass die Werkstückaufnahme 10 mit dem Werkstück 11 durch die Rundstation 9 gedreht wird und die Lage des Bearbeitungswerkzeugs 6 durch Schwenkung um die Schwenkachse 7 und Verschiebungen nach den Translationsachsen beständig angepasst wird. Ist eine Bahn fertig gefräst, so wird der Schlitten 2 parallel zur Längsachse des Werkstücks 11 um eine Bahnbreite verschoben und anschliessend die Werkstückaufnahme 10 in Gegenrichtung gedreht. Die Bearbeitung erfolgt also nach in Längsrichtung aufeinanderfolgenden umlaufenden Bahnen. Die Drehrichtungswechsel erfolgen vorzugsweise an einer Kante des Werkstücks 11.

Auch beim Bearbeiten von Verdichterrädern ergeben sich aus dem grossen Schwenkbereich wesentliche Vorteile, insbesondere gute Oberflächenqualität.

Zur Erzielung der erfindungsgemässen Wirkung ist es nicht nötig, dass der Neigungswinkel α genau 45° beträgt. Auch ein vom rechten Winkel nur wenig abweichender spitzer Winkel kann, bei geeigneter Konstruktion, bereits die geschilderten Vorteile bewirken. Bevorzugt wird allerdings ein zwischen 30° und 60° liegender Neigungswinkel α.

Es ist auch nicht erforderlich, dass die Schwenkachse 7 genau durch die Spitze des Bearbeitungswerkzeugs 6 geht. Auch wenn die Schwenkachse 7 in der Nähe des Bearbeitungswerkzeugs 6 vorbeigeht, sind bei Schwenkungen im allgemeinen nur kleine Ausgleichsbewegungen nötig.

## Patentansprüche

1. Werkzeugmaschine mit einer Werkstückaufnahme (10) sowie mit einem um eine Schwenkachse (7) schwenkbaren Werkzeugträger (4), in dem ein um eine Bearbeitungsachse (5) rotierbares Fräswerkzeug angeordnet ist, wobei die Bearbeitungsachse die Schwenkachse im Bereich der Spitze des Fräswerkzeuges schneidet, die Bearbeitungsachse (5) mit der Schwenkachse (7) einen Winkel (α) einschliesst, und Antriebsmittel vorgesehen sind, mit welchen die Schwenkachse und eine Rotationsachse einer Rotationsstation, in welcher die Werkstückaufnahme (10) angeordnet ist, während einer Bearbeitung antreibbar sind, wobei die Bewegungen der Achsen programmgesteuert erfolgen, **dadurch gekennzeichnet, dass** der Winkel (α) ein spitzer Winkel ist.

2. Werkzeugmaschine nach Anspruch 1, **dadurch gekennzeichnet, dass** der Neigungswinkel (α) zwischen 30° und 60° liegt.

3. Werkzeugmaschine nach Anspruch 2, **dadurch gekennzeichnet, dass** der Neigungswinkel (α) 45° beträgt.

4. Werkzeugmaschine nach einem der Ansprüche 1 bis 3, **dadurch gekennzeichnet, dass** die Werkstückaufnahme (10) in einer Rundstation (9), deren Drehachse mit der Bearbeitungsachse (5) einen positiven Winkel einschliesst, angeordnet ist und der Werkzeugträger (4) auf die Werkstückaufnahme (10) zu- und von ihr wegbewegbar ist.

5. Werkzeugmaschine nach Anspruch 4, **dadurch gekennzeichnet, dass** der Werkzeugträger (4) gegenüber der Werkstückaufnahme (10) nach drei Translationsachsen bewegbar ist.

6. Werkzeugmaschine nach Anspruch 5, **dadurch gekennzeichnet, dass** der Werkzeugträger (4) um die Schwenkachse (7) drehbar mit einem Schlitten (3) verbunden ist, welcher längs einer Translationsachse verschiebbar auf einem weiteren Schlitten (2) angeordnet ist, welcher längs einer zur erstgenannten Translationsachse normalen weiteren Translationsachse verschiebbar ist, wobei eine der Translationsachsen zur Drehachse der Rundstation (9) parallel ist.

7. Werkzeugmaschine nach Anspruch 6, **dadurch gekennzeichnet, dass** die weitere Translationsachse zur Drehachse der Rundstation (9) parallel ist.

8. Verwendung einer Werkzeugmaschine nach einem der Ansprüche 4 bis 7 zur Bearbeitung einer Turbinen- oder Triebwerkschaufel.

9. Verwendung nach Anspruch 8, **dadurch gekennzeichnet, dass** die Turbinen- oder Triebwerkschaufel um ihre Längsachse gedreht und nach in Längsrichtung aufeinanderfolgenden umlaufenden Bahnen bearbeitet wird.

10. Verwendung einer Werkzeugmaschine nach einem der Ansprüche 4 bis 7 zur Bearbeitung eines Verdichterrades.

## Claims

1. Machine tool having a workholder (10), and having a toolholder (4) which can be pivoted about a pivoting axis (7) and in which a milling tool which can be rotated about a machining axis (5) is arranged, the machining axis cutting the pivoting axis in the region of the tip of the milling tool, the machining axis (5) enclosing an angle (α) with the pivoting axis (7), and drive means being provided with the aid of which the pivoting axis and a rotation axis of a rotation station in which the workpiece holder (10) is arranged can be driven during machining, the movements of the axes being performed in a programme-controlled fashion, characterized in that the angle (α) is an acute angle.

2. Machine tool according to Claim 1, characterized in that the angle of inclination (α) is between 30° and 60°.

3. Machine tool according to Claim 2, characterized in that the angle of inclination (α) is 45°.

4. Machine tool according to one of Claims 1 to 3, characterized in that the workpiece holder (10) is arranged in a rotation station (9) whose axis of rotation encloses a positive angle with the machining axis (5), and the tool holder (4) can be moved towards and away from the workpiece holder (10).

5. Machine tool according to Claim 4, characterized in that the tool holder (4) can be moved along three translation axes with respect to the workholder (10).

6. Machine tool according to Claim 5, characterized in that the tool holder (4) is connected, such that it can rotate about the pivoting axis (7), to a carriage (3) which is arranged such that it can be displaced along a translation axis on a further carriage (2) which can be displaced along a further translation axis normal to the first-named translation axis, one of the translation axes being parallel to the rotation axis of the round station (8).

7. Machine tool according to Claim 6, characterized in that the further translation axis is parallel to the rotation axis of the round station (9).

8. Use of a machine tool according to one of Claims 4 to 7 for machining a turbine blade or engine blade.

9. Use according to Claim 8, characterized in that the turbine blade or engine blade is rotated about its longitudinal axis and is machined along tracks running round one after another in the longitudinal direction.

10. Use of a machine tool according to one of Claims 4 to 7 for the purpose of machining an impeller.

## Revendications

1. Machine-outil comprenant un logement (10) destiné à une pièce à usiner, ainsi qu'un porte-outil (4) apte à pivoter autour d'un axe de pivotement (7), dans lequel est disposé un outil de fraisage apte à effectuer des rotations autour d'un axe d'usinage (5), dans laquelle l'axe d'usinage coupe l'axe de pivotement dans la zone de la pointe de l'outil de fraisage, l'axe d'usinage (5) forme un angle (α) avec l'axe de pivotement (7), et des moyens d'entraînement sont prévus avec lesquels l'axe de pivotement et un axe de rotation d'un poste de rotation dans lequel est disposé le logement (10) destiné à une pièce à usiner peuvent être entraînés au cours d'un usinage, les mouvements des axes étant réalisés sous la forme d'une commande programmée, caractérisée en ce que l'angle (α) est un angle aigu.

2. Machine-outil selon la revendication 1, caractérisée en ce que l'angle d'inclinaison (α) s'élève entre 30 degrés et 60 degrés.

3. Machine-outil selon la revendication 2, caractérisée en ce que l'angle d'inclinaison (α) s'élève à 45 degrés.

4. Machine-outil selon l'une quelconque des revendications 1 à 3, caractérisée en ce que le logement (10) destiné à une pièce à usiner est disposé dans un poste cylindrique (9) dont l'axe de rotation forme un angle positif avec l'axe d'usinage (5), et le porte-outil (4) est à même d'effectuer un mouvement en direction et à l'écart du logement (10) destiné à la pièce à usiner.

5. Machine-outil selon la revendication 4, caractérisée en ce que le porte-outil (4) est à même de se déplacer par rapport au logement (10) destiné à la pièce à usiner en suivant trois axes de translation.

6. Machine-outil selon la revendication 5, caractérisée en ce que le porte-outil (4) est relié en rotation autour de l'axe de pivotement (7) à un coulisseau (3) qui est disposé, de manière à pouvoir se déplacer le long d'un axe de translation, sur un coulisseau supplémentaire (2) qui est à même de se déplacer le long d'un axe de translation supplémentaire perpendiculaire à l'axe de translation mentionné en premier lieu, un des axes de translation étant parallèle à l'axe de rotation du poste cylindrique (9).

7. Machine-outil selon la revendication 6, caractérisée en ce que l'axe de translation supplémentaire est parallèle à l'axe de rotation du poste cylindrique (9).

8. Utilisation d'une machine-outil selon l'une quelconque des revendications 4 à 7 pour l'usinage d'une aube de turbine ou de propulsion.

9. Utilisation selon la revendication 8, caractérisée en ce qu'on fait tourner l'aube de turbine ou de propulsion autour de son axe longitudinal et on la soumet à un usinage en suivant des bandes périphériques qui se succèdent en direction longitudinale.

10. Utilisation d'une machine-outil selon l'une quelconque des revendications 4 à 7 pour l'usinage d'une roue à aubes.
